# EUROPEAN PATENT APPLICATION

(11) **EP 4 693 758 A1**
(43) Date of publication of application: **11.02.2026**
(21) Application number: 23934990.5
(22) Date of filing: 06.11.2023
(51) Int. Cl.: H01R 13/52, H01R 25/14

(54) **PROTECTIVE DOOR, POWER TRACK AND TRACK SOCKET**

(30) Priority: 25.04.2023 CN 202320972947 U; 25.04.2023 CN 202320975781 U
(71) Applicant: Goneo Group Co., Ltd., Ningbo, Zhejiang 315300 (CN)
(72) Inventor: GUO, Yuanping, Ningbo, Zhejiang 315300 (CN); MEI, Qiqing, Ningbo, Zhejiang 315300 (CN); WANG, Junfu, Ningbo, Zhejiang 315300 (CN); ZHANG, Yihui, Ningbo, Zhejiang 315300 (CN)
(74) Representative: Cabinet Beau de Loménie
(86) International application number: PCT/CN2023/129966
(87) International publication number: WO 2024/221822

(57) **Abstract**

A protective door, a power track and a track socket, belonging to the technical field of sockets. The protective door (2) comprises a door base (21), door sheets (22) and reset springs (23), the door base (21) being provided with first limiting structures (211), each door sheet (22) being provided with a second limiting structure (221), the door sheets (22) being snap-fit on the door base (21) by means of cooperation of the first limiting structures (211) and the second limiting structures (221), and the door sheets (22) being capable of moving relative to the door base (21). The reset springs (23) are located between the door seat (21) and the door sheets (22), and the stretching and retraction direction of the reset springs (23) is parallel to the moving direction of the door sheets (22). Using the protective door (2) enables users to insert adapters into the power track or pull out the adapters from the power track with relatively small forces, thereby improving the smoothness of inserting and removing the adapters; moreover, the protective door (2) is not prone to deformation and aging, is not easily affected by oil smoke and salt stains, and has relatively high durability, thus further prolonging the service life of the power track, and enhancing user experience.

## Description

The present disclosure claims priority to Chinese Patent Application No. 202320972947.3, filed on April 25, 2023 and entitled "PROTECTIVE DOOR, POWER TRACK, AND TRACK SOCKET", and Chinese Patent Application No. 202320975781.0, filed on April 25, 2023 and entitled "HOUSING, POWER TRACK, AND TRACK SOCKET", the contents of which are incorporated herein by reference in their entireties.

### TECHNICAL FIELD

The present disclosure relates to the field of socket technologies, and in particular, relates to a protective door, a power track, and a track socket.

### BACKGROUND

As a new type of socket product, a track socket primarily consists of a power track (also referred to as an electrical track) and an adapter. The power track is mounted on a wall, a table top, or the like via its back plate. The adapter is plugged into the power track, and can move in a left-right direction along the power track. The number of the adapters may be increased or decreased according to user needs. Therefore, the track socket has gained widespread popularity in the market due to its flexible usability.

A housing of the power track has a track opening allowing the adapter to be plugged into. However, dust easily enters the interior of the power track through the track opening, causing wear on the internal conductive plate, and shortening the service life of the power track.

### SUMMARY

The present disclosure provides a protective door, a power track, and a track socket, which can overcome problems in the related art that dust easily enters the interior of the power track through a track opening, causing wear to an internal conductive plate and shortening the service life of the power track. The technical solutions are as follows.

In a first aspect, a protective door is provided, wherein the protective door includes a door base, a door leaf, and a reset spring;
the door base has a first limiting structure, the door leaf has a second limiting structure, the door leaf is snap-fit on the door base through engagement of the first limiting structure and the second limiting structure, and the door leaf is movable relative to the door base;
the reset spring is disposed between the door base and the door leaf, and an extension and contraction direction of the reset spring is parallel to a moving direction of the door leaf.

Optionally, a limiting cavity is disposed on a first surface of the door base, and the first limiting structure is disposed on a cavity wall of the limiting cavity;
a limiting bump is disposed on a first end surface of the door leaf, and the second limiting structure is disposed on a side wall of the limiting bump; and
an end portion of the limiting bump extends into the limiting cavity, and the first limiting structure is cooperated with the second limiting structure.

Optionally, a spring post is disposed within the limiting cavity on the first surface of the door base, one end of the reset spring is sleeved over the spring post, and the other end of the reset spring abuts against an end surface of the limiting bump.

Optionally, a spring groove facing the door base is disposed on the limiting bump, and an end portion of the reset spring abuts against a bottom of the spring groove.

Optionally, a recess facing the door base is disposed on the first end surface of the door leaf, and the limiting bump is disposed at a bottom of the recess.

Optionally, the door base is elongated, a plurality of limiting cavities are provided, and the plurality of limiting cavities are arranged sequentially along a length direction of the door base; and
a plurality of door leaves are provided, an end portion of the limiting bump of each of the plurality of door leaves extends into one of the limiting cavities.

Optionally, a plurality of partition ribs are disposed on the first surface of the door base along the length direction, and each of the plurality of partition ribs is disposed between every two adjacent limiting cavities.

Optionally, a limiting rib is disposed on a lower surface of the door leaf at a position proximal to the door base, the lower surface of the door leaf facing an electrode channel of a power track on which the door leaf is mounted; and
in response to the protective door shielding a track opening of the power track, the limiting rib is in contact with or is nearly in contact with a side wall of the electrode channel.

Optionally, the number of the first limiting structures and the number of the second limiting structures are both two; and
the two first limiting structures are opposite to each other, the two second limiting structures are opposite to each other, and one first limiting structure is cooperated with one second limiting structure, and the other first limiting structure is cooperated with the other second limiting structure.

Optionally, one of the first limiting structure and the second limiting structure is a strip-shaped groove or a strip-shaped opening, and the other of the first limiting structure and the second limiting structure is a protrusion structure, wherein a strip-shaped direction of the strip-shaped groove or the strip-shaped opening is parallel to a moving direction of the door leaf.

In a second aspect, a power track is provided. The power track includes: a housing, and the protective door according to the first aspect.

The housing includes a cover and a base plate, a track opening is disposed on a panel of the cover, the base plate has an electrode channel, the cover is detachably connected to the base plate via a connecting structure, and the track opening is opposite to the electrode channel;
the protective door is sandwiched between the cover and the base plate, and the door base is assembled on the base plate, the door leaf being movably disposed between the panel and the electrode channel; and
in response to the door leaf moving to a side of the track opening, the track opening is communicated with the electrode channel, and in response to the door leaf moving to shield the track opening, the track opening is not communicated with the electrode channel.

Optionally, in response to an adapter being plugged into the power track, n door leaves move to the side of the track opening, and in response to the adapter being unplugged from the power track, the n door leaves move to shield the track opening under the action of reset springs connected to the door leaves, n being a positive integer.

Optionally, the connecting structure includes a first engaging structure and a second engaging structure; and
the first engaging structure is disposed on an inner surface of the panel and distributed along a length direction of the panel, the second engaging structure is disposed on an inner surface of the base plate and distributed along a length direction of the base plate, and the first engaging structure is cooperated with the second engaging structure.

The connecting structure further includes a screw; and
the first engaging structure is connected to the second engaging structure via the screw.

Optionally, the cover further includes a side plate, and a wire routing channel 7 is formed between the side plate and the connecting structure, wherein the side plate is disposed on a side of the panel along a width direction.

Optionally, the housing further includes a back plate, and the back plate covers an outer surface of the base plate, and is snap-fit on the connecting structure.

Optionally, one of the first engaging structure and the second engaging structure is an engaging groove, and the other of the first engaging structure and the second engaging structure is a protruding rib; and
the first engaging structure is cooperated with the second engaging structure by the protruding rib being engaged in the engaging groove.

Optionally, in response to the base plate and the panel being fixed, a top wall of the electrode channel is spaced apart from the panel.

Optionally, a mounting chamber for assembling the protective door is formed among the panel, the electrode channel, and the base plate.

Optionally, a third protruding rib for fixing the protective door is arranged on an inner surface of the base plate and disposed within the mounting chamber; and
the third protruding rib includes a vertical portion and an inclined portion, and the inclined portion is disposed away from the inner surface of the base plate and inclined towards a position of the electrode channel, and an obtuse angle is formed between the inclined portion and the vertical portion.

In a third aspect, a track socket is provided. The track socket includes: an adapter, and the power track according to the second aspect, wherein the adapter is connected to the power track in a plugged and unplugged fashion.

It should be understood that the above general description and the detailed following description are only illustrative and explanatory and cannot limit the present disclosure.

### BRIEF DESCRIPTION OF DRAWINGS

The accompanying drawings herein, which are incorporated in the Description and constitute a part of the Description, show embodiments conforming to the present disclosure, and are used to explain the principles of the present disclosure together with the Description. In the accompanying drawings:
FIG. 1 is a schematic structural diagram of a housing of a power track according to some embodiments;
FIG. 2 is a schematic structural diagram of a housing of a power track according to some embodiments;
FIG. 3 is an exploded schematic structural diagram of a protective door according to some embodiments;
FIG. 4 is a schematic structural diagram of a protective door disposed in a housing, with the protective door in an open state, according to some embodiments;
FIG. 5 is a schematic structural diagram of a protective door disposed in a housing, with the protective door in a closed state, according to some embodiments;
FIG. 6 is a schematic structural diagram of a door base of a protective door according to some embodiments;
FIG. 7 is a schematic structural diagram of a door leaf of a protective door according to some embodiments;
FIG. 8 is a schematic structural diagram of a door leaf of a protective door according to some embodiments;
FIG. 9 is a schematic structural diagram of a door base of a protective door according to some embodiments; and
FIG. 10 is a schematic structural diagram of a housing of a power track according to some embodiments.

The symbols are illustrated as follows:
1. housing; 11. cover; 111. panel; 112. side plate; 113. track opening; 114. third protruding rib; 115. fourth protruding rib; 116. first engaging groove; 117. wire routing channel; 12. base plate; 121. electrode channel; 122. avoidance opening; 123. first protruding rib; 124. second protruding rib; 125. second engaging groove; 11-12. mounting chamber; and 13. back plate. 2. protective door; 21. door base; 210. limiting cavity; 211. first limiting structure; 212. spring post; 213. partition rib; 22. door leaf; 220. limiting bump; 221. second limiting structure; 222. spring groove; 223. recess; 224. limiting rib; 225. horizontal portion; 226. inclined portion; and 23. reset spring.

The above accompanying drawings illustrate embodiments of the present disclosure, which are to be described in more detail below. These accompanying drawings and descriptions are not intended to limit the scope of the concept of the present disclosure in any way, but rather to illustrate the concept of the present disclosure for those skilled in the art by reference to specific embodiments.

### DETAILED DESCRIPTION

For clearer descriptions of the objectives, technical solutions, and advantages of the present disclosure, embodiments of the present disclosure are described in detail hereinafter with reference to the accompanying drawings.

The terms used in the embodiments of the present disclosure are only used for explaining the present embodiments rather than being intended to limit the present disclosure. Unless otherwise defined, the technical terms or scientific terms used in the embodiments of the present disclosure shall be taken to mean the ordinary meanings as understood by the ordinary skill in the art to which the present disclosure belongs. The terms "first", "second", "third" and the like used in the description and claims of the present disclosure do not denote any order, quantity or importance, but are merely used to distinguish different components. Similarly, terms such as "a" or "one" do not indicate the quantity limit, but indicate the existence of at least one. The terms "comprise/include" or "contain" and the like are intended to mean that the elements or objects before the terms cover the elements or objects or equivalents listed after the terms, without excluding other elements or objects. The terms "connected", "coupled" and the like are not limited to physical or mechanical connections, and may include electrical connection, and the connection may be direct or indirect. The terms "upper", "lower", "left", "right", and the like are only used to indicate the relative positional relations, and after the absolute position of the described object changes, the relative positional relationship may also change accordingly.

The embodiments of the present disclosure provide a protective door, which is specifically applicable to a power track of a track socket. The track socket is a new type of socket product, which primarily consists of the power track and an adapter. The power track is mounted on a wall or embedded in a table top. The adapter is plugged into the power track in a plugged and unplugged fashion, and may be plugged at any position of the power track. The adapter has a hole for power supply, and an electrical device can draw power by plugging its plug into the hole of the adapter.

The number of adapters of the track socket is flexibly increased or decreased according to needs, and their positions are flexibly adjusted according to a position of an electrical device, without concerning about a short power cord of the electrical device. Moreover, compared with ordinary sockets, the track socket is safer and more aesthetically pleasing. Therefore, the track socket is widely popular in the market due to the above advantages.

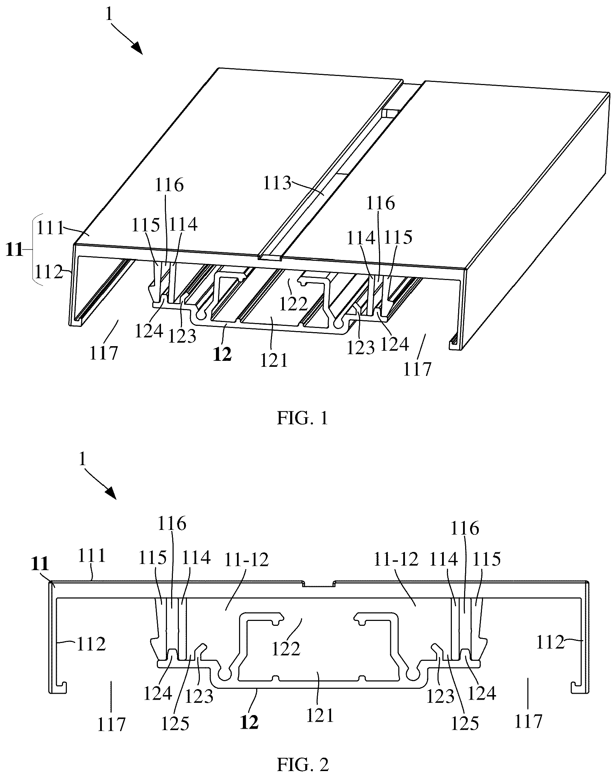

The power track primarily includes a housing 1, a conductive plate, an insulative bracket, and a junction box in terms of structure. The housing 1 is an outer shell of the power track to provide protection, and is made of an aluminum profile. Regarding structural features of the housing 1, as shown in FIG. 1, a track opening 113 is disposed on a panel 111 of the housing 1, and the housing 1 has an electrode channel 121.

In this way, the conductive plate and the insulative bracket are both mounted in the electrode channel 121, and the conductive plate is held by the insulative bracket. The junction box is mounted at one end of the housing 1, and the junction box is internally provided with a junction terminal configured to connect the conductive plate to a power line inside a wall. A power-drawing portion of the adapter passes through the track opening 113, and extends into the electrode channel 121 to be in contact with and electrically connected to the conductive plate in the electrode channel 121. A hole is disposed on the top of the adapter for power supply, and an electrical device can draw power by plugging a plug of the electrical device into the hole of the adapter.

However, the track opening 113 of the power track is exposed to the outside, which is unsafe and is prone to water and dust ingress. The water ingress causes safety accidents, and the dust ingress wears the conductive plate in the electrode channel 121. Both the water ingress and the dust ingress shorten the service life of the power track.

Therefore, to prevent dust ingress, block foreign objects, and maintain aesthetics, the power track further includes a protective door. The protective door is disposed in the housing to shield the track opening 113.

In order to facilitate the plugging of the adapter into the track opening 113, protective doors on the current market are usually soft rubber sealing strips that are easily deformed under compression. However, upon long-term use, these protective doors undergo plastic deformation, which leads to collapse, and fails to achieve a sealing effect arising from incomplete closure. Especially, the above situation is more exacerbated when these protective doors are mounted in kitchen environments with oil fumes and salt stains. Moreover, in environments with oil fumes and salt stains, aging and hardening of the above protective doors are accelerated, which also adversely affects the plugging, unplugging, and movement of the adapter along the track opening.

However, in the power track according to the embodiments of the present disclosure, the protective door of the power track is made of plastic. Plastic has the features of excellent contact performance, low susceptibility to aging, and low tendency to deform, which prolongs the service life of the power track and enhances the user experience.

The power track includes a housing 1. Regarding the structural features of the housing 1, as shown in FIGS. 1 and 2, the housing 1 includes a cover 11 and a base plate 12. The cover 11 has a hood-shaped structure including a panel 111 and two side plates 112. The panel 111 A track opening 113 is disposed on the panel 111 along the length direction. The center line of the track opening 113 coincides with the center line of the panel 111. That is, the track opening 113 is disposed at the center line of the panel 111.

As shown in FIG. 2 and referring to FIG. 1, the base plate 12 is plate-shaped. The upper surface of the base plate 12, i.e., the upper surface faces the cover 11, and has an electrode channel 121.

The electrode channel 121 is opposite to the track opening 113, such that the power-drawing portion of the adapter is plugged into the track opening 113 and enter the electrode channel 121 to be electrically connected to the conductive plate in the electrode channel 121. In order to allow the adapter to enter the electrode channel 121, as shown in FIGS. 1 and 2, avoidance opening 122 is disposed on the top wall of the electrode channel 121 facing the panel 111. The avoidance opening 122 is opposite to the track opening 113.

Regarding the assembly of the cover 11 and the base plate 12, the housing 1 is a split-type housing. The cover 11 and the base plate 12 are independent of each other and are fixed together by snap-fitting or via a screw, or by both the snap-fitting and the screw. For example, the cover 11 and the base plate 12 are pre-positioned first, and then fixed with the screw. The pre-positioning of the cover 11 and the base plate 12 is achieved by snap-fitting.

For example, as shown in FIGS. 1 and 2, second protruding ribs 124 are disposed on the upper surface of the base plate 12 at the left and right of the electrode channel 121. Third protruding ribs 114 and fourth protruding ribs 115 are disposed on lower surface of the panel 111, i.e., the surface facing the base plate 12. A first engaging groove 116 is formed between each third protruding rib 114 and the corresponding fourth protruding rib 115. The second protruding ribs 124 on the upper surface of the base plate 12 is engaged into the first engaging grooves 116 to achieve the pre-positioning of the cover 11 and the base plate 12.

It should be noted that the above second protruding ribs 124, third protruding ribs 114, and fourth protruding ribs 115 are all strip-shaped protruding ribs arranged along the length direction of the housing 1.

In an example, because the power track further includes a protective door mounted in the housing 1, the housing 1 has a mounting chamber for the protective door. As shown in FIG. 2, a mounting chamber 11-12 for the protective door is formed by the panel 111, the left and right third protruding ribs 114, the base plate 12 and the electrode channel 121 in surrounding fashion. The protective door is mounted in the mounting chamber 11-12.

The above housing 1 is assembled from the cover 11 and the base plate 12. In another example, the housing 1 has an integrally formed structure including the cover 11 and the base plate 12.

The above is an introduction to the structural features of the housing 1. The present embodiment does not limit the specific structural features of the housing 1.

It should be noted that to facilitate the assembly of the protective door 2 into the housing 1, the housing 1 is a split-type housing including the cover 11 and the base plate 12 as described above. The specific features of the split-type housing are to be described in detail in the embodiments of the power track below.

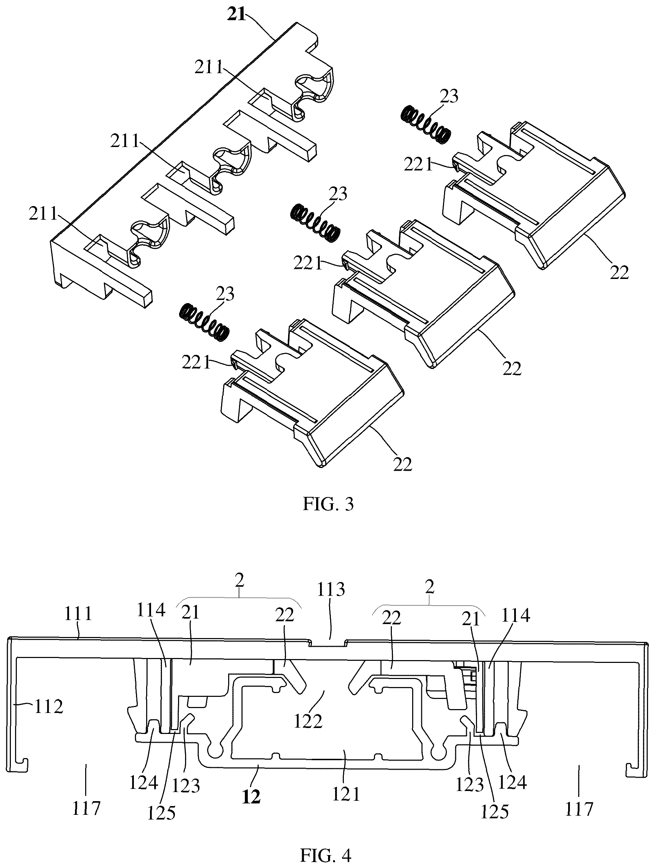

The power track further includes a protective door 2. As shown in FIG. 4, the number of protective doors 2 is two. The two protective doors are symmetrical about the vertical plane where the center line of the track opening 113 is disposed. One protective door is located on the left side of the vertical plane, and is referred to as the left protective door, and the other protective door is located on the right side of the vertical plane, and is referred to as the right protective door.

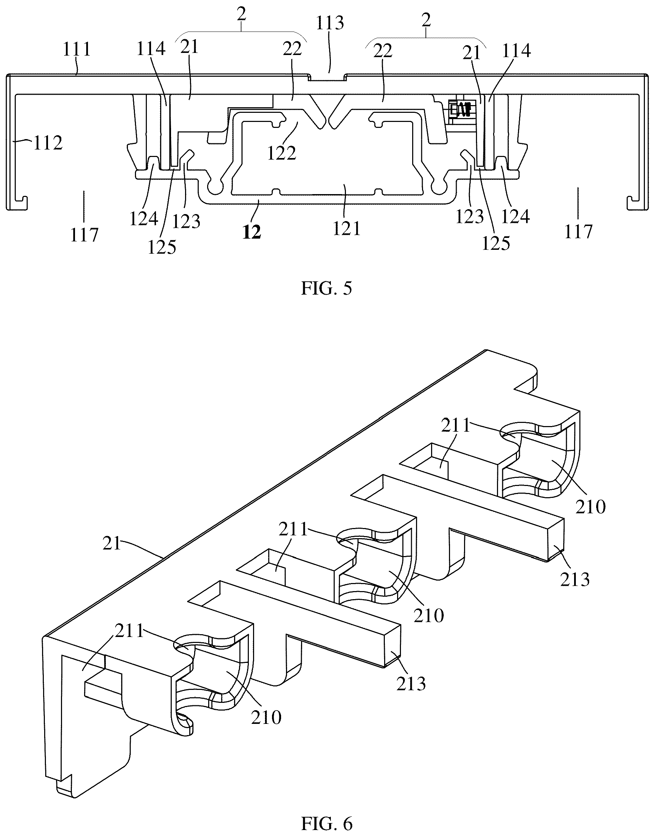

As shown in FIG. 4, in response to the protective door 2 being in the open state, the left protective door and the right protective door are separated, such that the track opening 113 is exposed, thereby allowing the adapter to extend into the electrode channel 121. As shown in FIG. 5, in response to the protective door 2 being in the closed state, the left protective door and the right protective door are in contact or nearly in contact with each other, jointly shielding the track opening 113.

It can be seen that the power track includes the protective door. In response to the adapter being not plugged into the track opening, the door leaf of the protective door shields the track opening, playing a role in sealing the track opening. In response to the adapter being plugged into the track opening, the adapter applies a force to the door leaf, pushing the door leaf to one side of the track opening. The door leaf does not shield the track opening, such that the adapter is in contact with the conductive plate in the electrode channel. In response to the adapter being unplugged from the track opening, the reset spring rebounds, pushing the door leaf to the position where it shields the track opening. Therefore, in the power track, by using the door leaf to shield the track opening, the safety of the power track can be improved, such that the power track can achieve waterproofing, dustproofing, and oil stain prevention, thereby prolonging the service life of the power track.

The structural features of the protective door 2 are to be described below. As shown in FIG. 3, the protective door 2 includes a door base 21, door leaves 22, and reset springs 23. The door leaves 22 are configured to shield the track opening 113. The door base 21 serves as a fixing member for mounting the door leaves 22 in the housing 1. Each reset spring 23 is disposed between the door base 21 and the corresponding door leaf 22. The extension and contraction direction of the reset spring 23 is parallel to a moving direction of the door leaf 22, and the reset spring 23 is configured to reset the door leaf 22 to the position to shield the track opening 113.

In an example, the protective door 2 is mounted in the housing 1 via the door base 21. For example, as shown in FIG. 2, a first protruding rib 123 is disposed on the upper surface of the base plate 12 between each second protruding rib 124 and the electrode channel 121. A second engaging groove 125 is formed between each first protruding rib 123 and the corresponding second protruding rib 124. As shown in FIG. 4, the door base 21 is engaged into the second engaging grooves 125. Specifically, the door base 21 is engaged between the first protruding ribs 123 and the third protruding ribs 114.

The protective door 2 is disposed in the housing 1. In response to the adapter being plugged into the track opening 113, as shown in FIG. 4, the door leaves 22 move to the side of the track opening 113. In response to the adapter being unplugged from the track opening 113, as shown in FIG. 5, the door leaves 22 move to shield the track opening 113 under the elastic action of the reset springs 23. The adapter is not shown in FIGS. 4 and 5.

In an example, the material of the protective door 2 is plastic. For example, the door base 21 and the door leaf 22 are made of plastic. Compared with rubber, plastic is harder, less prone to deformation, less prone to aging, and less affected by oil fumes and salt stains. Therefore, such a protective door can prolong the service life of the power track and enhance the user experience.

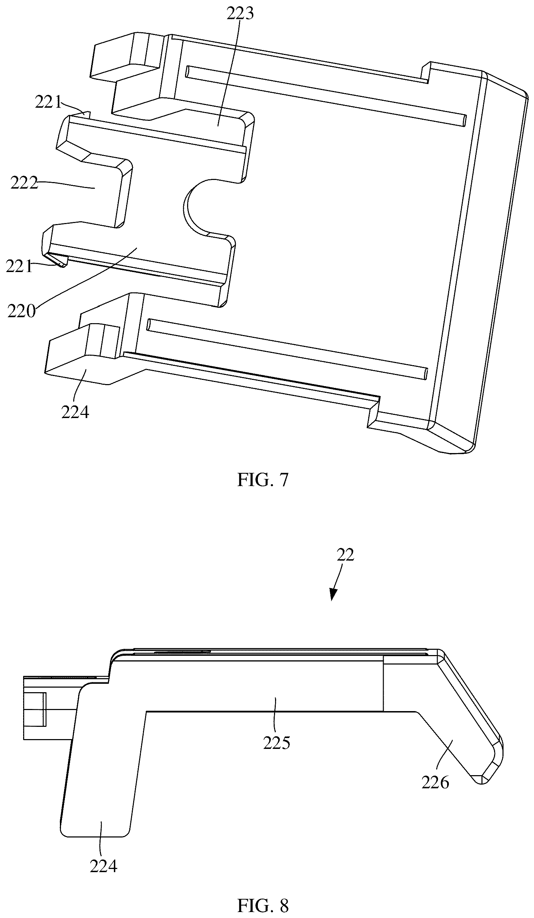

In an example, during the reciprocating movement of the door leaves 22 relative to the door base 21, to prevent the door leaves 22 from disengaging from the door base 21, accordingly, as shown in FIG. 6, the door base 21 has first limiting structures 211. As shown in FIG. 7, each door leaf 22 has a second limiting structure 221. In this way, the door leaves 22 can be snap-fit on the door base 21 through the cooperation of the first limiting structures 211 and the second limiting structures 221.

To enable the door leaves 2 to switch between shielding the track opening 113 and exposing the track opening 113, accordingly, the door leaves 22 are also movable relative to the door base 21.

Regarding the specific structures of the first limiting structure 211 and the second limiting structure 221, for example, the first limiting structure 211 is a strip-shaped opening or a strip-shaped groove, and the second limiting structure 221 is a protrusion structure. Referring to FIG. 3, the first limiting structure 211 is the strip-shaped opening, and the second limiting structure 221 is the protrusion structure.

Alternatively, the first limiting structure 211 is the protrusion structure, and the second limiting structure 221 is the strip-shaped opening or the strip-shaped groove.

In this way, by disposing the protrusion structure in the strip-shaped opening or by disposing the protrusion in the strip-shaped groove, the door leaves 22 can be snap-fit on the door base 21.

Because the door leaves 22 are also movable relative to the door base 21, to provide an operational space for movement of the door leaves 22, accordingly, the strip-shaped direction of the strip-shaped opening or strip-shaped groove is parallel to the moving direction of the door leaves 22. In this way, not only can the door leaves 22 be allowed to move relative to the door base 21, but also the door leaves 22 can be snap-fit on the door base 21, thereby preventing the door leaves 22 from disengaging from the door base 21.

The specific structural forms of the first limiting structure 211 and the second limiting structure 221 are not limited in the present embodiment. For example, the first limiting structure 211 is the strip-shaped opening and the second limiting structure 221 is the protrusion structure.

In an example, the length of each first limiting structure 211 is equal to or slightly larger than the movement stroke of the corresponding door leaf 22.

In this way, in response to the door leaves 22 shielding the track opening 113, the second limiting structures 221 on the door leaves 22 are in contact with or nearly in contact with the first limiting structures 211 on the door base 21. It can be seen that even though the elastic force of the reset springs 23 is relatively large, because the second limiting structures 221 are engaged between the edges of the first limiting structures 211, the door leaves 22 do not disengage from the door base 21.

In an example, to form the first limiting structures 211 on the door base 21, accordingly, as shown in FIG. 6, a first surface of the door base 21 has limiting cavities 210. The first limiting structure 211 is an opening formed in a cavity wall of each limiting cavity 210. The first surface of the door base 21 is the surface facing the door leaves 22 and perpendicular to the moving direction of the door leaves 22.

In another example, another way to form the first limiting structures 211 on the door base 21 is that the first surface of the door base 21 is provided with side walls perpendicular to the first surface, and the first limiting structure 211 is an opening formed in each side wall.

The specific formation ways of the first limiting structures 211 are not limited in the present embodiment, and in an example, the first limiting structures 211 are formed in the cavity walls of the limiting cavities 210.

In an example, to form the second limiting structures 221 on the door leaves 22, accordingly, as shown in FIG. 7, a limiting bump 220 is disposed on a first end surface of each door leaf 22. The second limiting structure 221 is disposed on a side wall of each limiting bump 220. In this way, an end portion of the limiting bump 220 extends into the limiting cavity 210, and the second limiting structure 221 is disposed in the first limiting structure 211.

The first end surface of each door leaf 22 is the end surface facing the door base 21 and perpendicular to the moving direction of the door leaf 22.

In an example, regarding the number of the first limiting structures 211 and the number of the second limiting structures 221, as shown in FIGS. 6 and 7, the number of the first limiting structures 211 and the number of the second limiting structures 221 are two, respectively. The two first limiting structures 211 are opposite to each other. The two second limiting structures 221 are opposite to each other. One second limiting structure 221 is disposed in one first limiting structure 211, and the other second limiting structure 221 is disposed in the other first limiting structure 211.

More first limiting structures 211 and the more second limiting structures 221 are provided. In the present embodiment, two first limiting structures 211 and two second limiting structures 221 are used to exemplify the accompanying drawings.

In an example, in response to the second limiting structures 221 disengaging from the first limiting structures 211, in the case that the rebound force of the reset springs 23 is larger, the door leaves 22 disengage from the door base 21. To avoid this situation, accordingly, as shown in FIGS. 7 and 8, a limiting rib 224 is disposed on a lower surface of each door leaf 22 proximal to the door base 21. In response to the protective door 2 shielding the track opening 113 of the power track, the limiting ribs 224 are in contact with or are nearly in contact with a side wall of the electrode channel 121.

The lower surface of the door leaf 22 is the surface facing the electrode channel 121 of the power track.

It can be seen that even though the second limiting structures 221 disengage from the first limiting structures 211, because the side wall of the electrode channel 121 in the housing 1 blocks the limiting ribs 224, the door leaves 22 can be prevented from continuing to move in a direction distal from the door base 21. Therefore, the contact between the limiting ribs 224 and the side wall of the electrode channel 121 can further prevent the door leaves 22 from disengaging from the door base 21.

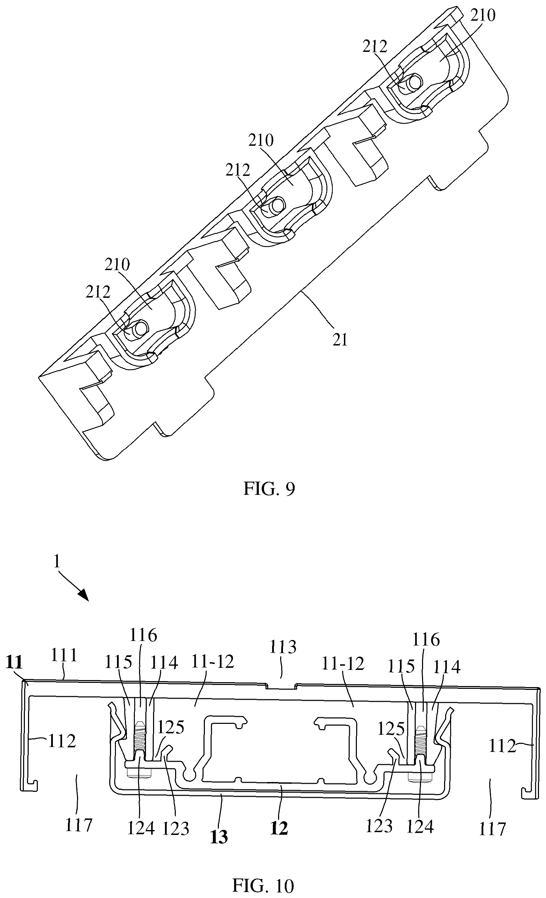

In an example, as described above, the reset springs 23 are disposed between the door base 21 and the door leaves 22. For example, as shown in FIG. 9, a spring post 212 is disposed on the first surface of the door base 21 within each limiting cavity 210. One end of each reset spring 23 is sleeved over the corresponding spring post 212, and the other end thereof abuts against an end surface of the corresponding limiting bump 220.

In an example, the reset spring 23 is sleeved over the spring post 212. The spring post 212 may ensure that the extension and contraction movement of the reset spring 23 remains as linear as possible. In addition, because the spring post 212 is disposed within the limiting cavity 210, the cavity wall of the limiting cavity 210, to some extent, also restricts the extension and contraction movement of the reset spring 23 to remain as linear as possible.

In an example, as shown in FIG. 7, a spring groove 222 facing the door base 21 is disposed on each limiting bump 220. An end portion of each reset spring 23 abuts against the bottom of the spring groove 222.

Compared with the end portion of the reset spring 23 abutting against the first end surface of the limiting bump 220, the end portion of the reset spring 23 abutting against the bottom of the spring groove 222 as shown in FIG. 7 can reduce the size of the protective door 2 along the length direction of the reset spring 23, thereby further reducing the space occupied by the protective door 2 in the housing 1.

In an example, as shown in FIG. 7, a recess 223 facing the door base 21 is disposed on a first end surface of each door leaf 22. The limiting bump 220 is disposed at the bottom of the recess 223.

With the limiting bump 220 disposed in the recess 223, the size of the door leaf 22 along the length direction of the reset spring 23 can be reduced, thereby reducing the size of the protective door and reducing the space occupied by the protective door in the housing 1.

In an example, because the track opening 113 is arranged along the length direction of the power track, i.e., the track opening 113 is elongated, the protective door 2 also needs to be elongated. Accordingly, as shown in FIG. 6, the door base 21 is elongated. A plurality of limiting cavities 210 are provided, and arranged sequentially along the length direction of the door base 21. As shown in FIG. 3, a plurality of door leaves 22 and a plurality of reset springs 23 are provided. An end portion of the limiting bump 220 of each door leaf 22 extends into one limiting cavity 210. Each reset spring 23 is disposed between the door base 21 and one door leaf 22. For example, each reset spring 23 is sleeved over a spring post 212 within one limiting cavity 210, and an end portion thereof abuts against the bottom of a spring groove 222 of one door leaf 22.

In an example, to avoid interference between two adjacent door leaves 22 during movement, accordingly, as shown in FIG. 6, a plurality of partition ribs 213 are arranged on the first surface of the door base 21 along the length direction. Each partition rib 213 is disposed between every two adjacent limiting cavities 210. In this way, in response to the limiting bump 220 of each door leaf 22 extending into one limiting cavity 210, the two adjacent door leaves 22 are blocked by the partition rib 213, such that the two adjacent door leaves 22 does not interfere with each other in movement.

In this way, in response to one adapter being plugged into the track opening 113, n door leaves 22 are subjected to the force from the adapter and move to the side of the track opening 113. The door leaves 22 not subjected to the force from the adapter still shield the track opening 113. In response to the adapter being unplugged from the track opening 113, the n door leaves 22 return to shield the track opening 113 under the elastic action of the reset springs 23 connected to the door leaves.

Here, n is a positive integer. For example, n is 1, or is a value ranging from 2 to 8, or n is greater than 8.

In an example, the length of one door base 21 is adapted to the length of the track opening 113. For example, the length of the door base 21 may be approximately equal to that of the track opening 113.

In another example, because the track opening 113 is relatively long, a plurality of door bases 21 are also provided. The plurality of door bases 21are arranged end to end sequentially along the length direction of the track opening 113.

For example, a plurality of door bases 21 are arranged on the left side of the track opening 113, and is arranged end to end sequentially along the length direction of the track opening 113. A plurality of door bases 21 are arranged on the right side of the track opening 113, and is arranged end to end sequentially along the length direction of the track opening 113.

In an example, to enable the adapter that is plugged into the track opening 113 to smoothly push the door leaves of the left protective door to move leftward and the door leaves of the right protective door to move rightward, accordingly, as shown in FIG. 8, the door leaf 22 may include a horizontal portion 225 and an inclined portion 226, which are integrally formed.

An angle θ between the horizontal portion 225 and the inclined portion 226 is an obtuse angle.

In an example, the inclined portion 226 of the door leaf 22 plays a guiding role in response to the adapter passing through the track opening 113 and being plugged into the electrode channel 121. Therefore, referring to FIG. 5, an end portion of the inclined portion 226 extends into an avoidance opening 122 of the electrode channel 121.

In this way, in the case that the power-drawing portion of the adapter is plugged into the track opening 113 and continues to advancing towards the direction of the electrode channel 121, under the guiding action of the inclined portions 226 of the door leaves 22, the door leaves of the left protective door can be smoothly moved leftward, and the door leaves of the right protective door can be smoothly moved rightward.

In the present embodiment, the power track includes the protective door. In response to the adapter being not plugged into the track opening, the door leaves of the protective door shield the track opening, playing a role in sealing the track opening. In response to the adapter being plugged into the track opening, the adapter applies a force to the door leaves, pushing the door leaves to one side of the track opening. The door leaves do not shield the track opening, such that the adapter is in contact with a conductive plate in the electrode channel. In response to the adapter being unplugged from the track opening, the reset springs rebound, pushing the door leaves to the positions where they shield the track opening. Therefore, in the power track, by using the door leaves to shield the track opening, the safety of the power track can be improved, such that the power track can achieve waterproofing and dustproofing, thereby prolonging the service life of the power track.

Moreover, the protective door includes the door base and the door leaves, and the materials of the door base and the door leaves are both plastic. Compared with a fully metallic protective door, such a protective door allows a user to plug the adapter into the power track or unplug the adapter from the power track with less force, such that the plugging and unplugging of the adapter can be smoother, and no metallic friction noise is generated during the plugging and unplugging of the adapter, thereby improving the user experience.

Compared with a fully rubber protective door, the plastic material of this protective door is harder, less prone to deformation, less prone to aging, and less affected by oil fumes and salt stains. In this way, this protective door is stronger in durability, can further prolong the service life of the power track, and to some extent, enhances the user experience.

A track socket is further provided according to the embodiments of the present disclosure. The track socket includes: a power track and adapters, wherein the power track is the power track described above, the plurality of adapters are provided, and each adapter is connected to the power track in a plugged and unplugged fashion.

In response to the adapters being not plugged into the track opening 113, the protective door of the power track is in a closed state. In response to the adapters being plugged into the track opening 113, the protective door is in an open state, and power-drawing portions of the adapters extend into the electrode channel 121.

As described above, to facilitate the assembly of the above protective door into the housing 1, accordingly, the housing 1 of the track socket is a split-type housing, and as shown in FIG. 10, includes the cover 11 and the base plate 12 described above. Then, during assembly, the protective door 2 is mounted on the base plate 12 first, and then the cover 11 and the base plate 12 are fixed.

For example, the protective door 2 is sandwiched between the cover 11 and the base plate 12. The door base 21 is assembled on the base plate 12. The door leaves 22 are movably disposed between the panel 111 and the electrode channel 121.

In response to the door leaves 22 moving to the side of the track opening 113, the track opening 113 is communicated with the electrode channel 121. In response to the door leaves 22 moving to shield the track opening 113, the track opening 113 is not communicated with the electrode channel 121.

The structural features of the split-type housing 1 of the power track are to be described below.

The cover 11 is fixedly connected to the base plate 12via connecting structures on two sides of the electrode channel 121 along the width direction.

For example, the cover 11 is fixedly connected to the base plate 12 via one connecting structure on one side of the electrode channel 121, and via the other connecting structure on the other side of the electrode channel 121.

In an example, the connecting structure is an engaging structure. Then, accordingly, as shown in FIG. 10, the inner surface of the panel 111 has first engaging structures (e.g., first engaging grooves 116) distributed along the length direction. The inner surface of the base plate 12 has second engaging structures (e.g., second protruding ribs 124) distributed along the length direction. In this way, each first engaging structure and the corresponding second engaging structure form one connecting structure. The base plate 12 is fixed on the inner surface of the panel 111 through the cooperation of the first engaging structures and the second engaging structures.

The inner surface of the panel 111 is the surface facing the base plate 12. The inner surface of the base plate 12 is the surface facing the panel 111.

As shown in FIG. 10, the first engaging structure is an engaging groove, and the second engaging structure is a protruding rib. Alternatively, the first engaging structure is a protruding rib, and the second engaging structure is an engaging groove.

In this way, one of the first engaging structure and the second engaging structure is an engaging groove, and the other thereof is a protruding rib. The first engaging structure is cooperated with the second engaging structure, that is, the protruding rib is engaged into the engaging groove, thereby achieving fixed connection between the cover 11 and the base plate 12.

Here, the protruding rib is engaged in the engaging groove by, for example, an interference fit.

The present embodiment does not specifically limit which of the first engaging structure and the second engaging structure is the engaging groove or the protruding rib. For example, the first engaging structure is the engaging groove, denoted as the first engaging groove 116, and the second engaging structure is the protruding rib, denoted as the second protruding rib 124.

Because the number of the connecting structures is two, the number of the first engaging grooves 116 and the number of the second protruding ribs 124 are also two, respectively. As shown in FIG. 10, the two first engaging grooves 116 are disposed on the left and right sides of the track opening 113 along the width direction. The two second protruding ribs 124 are disposed on the left and right sides of the electrode channel 121 along the width direction.

As shown in FIG. 10, the first engaging groove 116 is cooperated with the second protruding rib 124 that are disposed on the left side of the electrode channel 121, and the first engaging groove 116 is cooperated with the second protruding rib 124 that are disposed on the right side of the electrode channel 121, thereby positioning the base plate 12 on the inner surface of the panel 111.

The first engaging groove 116 is formed as follows. As shown in FIG. 2, third protruding ribs 114 and fourth protruding ribs 115 are arranged on the inner surface of the panel 111 along the length direction of the panel 111. An engaging groove is formed between each third rib 114 and the corresponding fourth rib 115, is denoted as the first engaging groove 116, and serves as the first engaging structure.

Because the number of first engaging grooves 116 is two, the number of third protruding ribs 114 and the number of fourth protruding ribs 115 are also two, respectively. As shown in FIG. 10, one first engaging groove 116 is formed between the third protruding rib 114 and the fourth protruding rib 115 that are disposed on the left side of the track opening 113, and the other first engaging groove 116 is formed between the third protruding rib 114 and the fourth protruding rib 115 that are disposed on the right side of the track opening 113.

As shown in FIG. 10, the second protruding rib 124 disposed on the left side of the electrode channel 121 is engaged into the first engaging groove 116 formed between the third protruding rib 114 and the fourth protruding rib 115 that are disposed on the left side of the track opening 113. The second protruding rib 124 disposed on the right side of the electrode channel 121 is engaged into the first engaging groove 116 formed between the third protruding rib 114 and the fourth protruding rib 115 that are disposed on the right side of the track opening 113, thereby achieving fixed connection between the cover 11 and the base plate 12.

In another example, the connecting structures for fixedly connecting the cover 11 and the base plate 12 not only include the first engaging grooves 116 and the second protruding ribs 124, but also include screws, as shown in FIG. 10.

In this way, the cover 11 and the base plate 12 are pre-positioned or pre-assembled through the cooperation of the first engaging grooves 116 and the second protruding ribs 124, and then tightly connected via the screws.

In an example, as shown in FIG. 10, the screws are connected between the third protruding ribs 114 and the fourth protruding ribs 115. For example, the first engaging groove 116 and the second protruding rib 124 are fastened by the screws.

For example, a plurality of mounting holes are disposed in the second protruding ribs 124 along the length direction. As shown in FIG. 10, the plurality of screws pass through the plurality of mounting holes in the second protruding ribs 124 and be mounted in the first engaging grooves 116. The mounting holes are through holes.

As an example, the screw is disposed in the first engaging groove 116 by an interference fit.

As another example, the screws are screwed into the first engaging groove 116. For example, a plurality of threaded holes are disposed in the first engaging groove 116 arranged along the length direction. The screws may pass through the mounting holes in the second protruding rib 124 and be screwed into the threaded holes in the first engaging groove 116.

In an example, the power track is mounted on a wall. For example, a junction box of the power track covers directly above a wall power source to facilitate wiring.

To improve the mounting flexibility of the power track, accordingly, a wire routing channel is disposed in the housing 1. In this way, a connecting line between the junction box and the wall power source is arranged in the wire routing channel. Then, during mounting of the power track, the junction box of the power track does not need to cover directly above the wall power source, thereby improving the mounting flexibility of the power track.

To form a wire routing channel in the housing, accordingly, as shown in FIG. 10, the cover 11 further includes side plates 112. The side plates 112 are disposed on sides of the panel 111 along the width direction. Wire routing channels 117 are formed between the side plates 112 and the connecting structures of the cover 11 and the base plate 12. For example, the wire routing channels 117 are formed between the side plates 112 and a first surface.

The first surface is the surface of the first engaging groove 116 and the surface of the second protruding rib 124 that is most distal from the electrode channel 121.

For example, as shown in FIG. 10, the wire routing channels 117 are formed between the side plates 112 and the surfaces, away from the electrode channel 121, of the first engaging grooves 116, i.e., between the side plates 112 and the surfaces, away from the electrode channel 121, of the fourth protruding ribs 115.

In an example, one wire routing channel 117 is provided, and then, one side plate 112 is provided. In another example, the number of the wire routing channels 117 is two, as shown in FIG. 10, the number of the side plates 112 is two, and the two side plates 112 are disposed on two sides of the panel 111 along the width direction. In this way, one wire routing channel 117 is formed between one side plate 112 and one fourth protruding rib 115, and the other wire routing channel 117 is formed between the other side plate and the other fourth protruding rib 115.

In an example, to mount the power track on a wall, accordingly, as shown in FIG. 10, the housing 1 may further include a back plate 13. The back plate 13 covers the outer surface of the base plate 12 and is snap-fit on a connection interface between the cover 11 and the base plate 12, for example, snap-fit on the first surface. The first surface is the same as the first surface mentioned above, i.e., is the surface of the first engaging groove 116 and the surface of the second protruding rib 124 that is most distal from the electrode channel 121.

For example, the first surface is the surface, away from the electrode channel 121, of the first engaging groove 116, such as the surface, away from the electrode channel 121, of the fourth protruding rib 115.

As an example, a protrusion structure is disposed on the surface, away from the electrode channel 121, of the fourth protruding rib 115. A protrusion structure is disposed on the inner surface of the side wall of the back plate 13. In this way, by snap-fitting the protrusion structure of the fourth protruding rib 115 with the protrusion structure of the back plate 13, the back plate 13 is fixedly connected to the cover 11.

As shown in FIG. 10, the back plate 13 is U-shaped, specifically, has a U-shaped structure with a length adapted to the length of the cover 11. Alternatively, the length of the back plate 13 is much smaller than the length of the cover 11, but the number of back plates 13 are multiple, for example, two or three, or more. These back plates 13 are arranged along the length direction of the cover 11.

In this way, the back plate 13 is fixed on the wall, and the assembled housing 1 is snap-fit on the back plate 13. Then, the power track is mounted on the wall, and a wire routing channel 117 is formed between the side wall of the back plate 13 and the side plate 112 of the cover 11.

As described above, the power track further includes a protective door 2. Then, as shown in FIG. 2, a mounting chamber 11-12 for assembling the protective door is formed among the panel 111, the electrode channel 121, and the base plate 12.

As shown in FIG. 10, the above first ribs 123 are disposed in the mounting chamber 11-12. The door base 21 is engaged into the second engaging grooves 125 between the first ribs 123 and the second protruding ribs 124.

To facilitate the assembly of the protective door 2, as shown in FIG. 10, each first rib 123 may include a vertical portion and an inclined portion. The vertical portion is directly disposed on the inner surface of the base plate 12. The inclined portion is disposed away from the inner surface of the base plate 12 and inclined towards the direction of the electrode channel 121, and an obtuse angle is formed between the inclined portion and the vertical portion. In this way, the inclined portion may serve as a guiding structure for mounting the protective door, such that the positioning of the first rib 123 between two side walls of the door base 21, or the positioning of the door base 21 in the second engaging groove 125 between the second protruding rib 124 and the first rib 123 is facilitated, thereby improving the efficiency of assembling the protective door.

In an example, the housing of the power track is a split-type housing rather than an integral housing. For this split-type housing, the protective door is assembled on the cover or the base plate first, and then, the cover and the base plate are fixed together. In this way, the protective door does not need to be inserted from one end of the housing along the length direction and gradually pushed into the housing, thereby improving the assembly efficiency of the protective door. Moreover, this assembly method of the protective door is also operated by a robot hand, which is conducive to automated assembly and further improves assembly efficiency.

Moreover, upon long-term use, the protective door of the power track is damaged, reducing sealing performance. However, because the housing 1 is split-type, the cover 11 and the base plate 12 can be disassembled. In this way, the user can disassemble the cover 11 and the base plate 12 to replace the protective door, thereby prolonging the service life of the power track.

In addition, the housing of the power track is split-type. For the split-type housing, in response to the structure of components inside the housing changing, in most cases, only the cover needs to be adjusted while the base plate remains in use, or only the base plate needs to be adjusted while the cover remains in use. Therefore, the housing material consumption can be reduced, thereby reducing the cost, and furthermore, the workload of adjusting the housing can be reduced.

For example, in response to the structure of the components mounted inside the housing 1 changing, it is not necessary to change the entire housing 1. For example, in response to the structure of the components mounted in the electrode channel 121 (such as an insulative bracket) changing, only the structure of the base plate 12 where the electrode channel 121 is disposed needs to be adaptively adjusted, without adjusting the cover 11. At this point, the cover 11 can still be used. For another example, in response to the structure of components mounted in the cover 11 (such as the protective door) changing, only the structure of the cover 11 needs to be adaptively adjusted, without adjusting the base plate 12. At this point, the base plate 12 can still be used.

Therefore, for this split-type housing, the housing material consumption can be reduced, thereby reducing the cost, and furthermore, the workload of adjusting the housing can be reduced.

Moreover, during the iterative updates of the power track, because only the structure of the cover or the structure of the base plate needs to be adjusted, the cover and the base plate have stronger adaptability, which is conducive to large-scale production, for example, large-scale processing of covers or large-scale processing of base plates.

In the present embodiment, the power track of the track socket includes the protective door. In response to the adapter being not plugged into the track opening, the door leaves of the protective door shield the track opening, playing a role in sealing the track opening. In response to the adapter being plugged into the track opening, the adapter applies a force to the door leaves, pushing the door leaves to one side of the track opening. The door leaves do not shield the track opening, such that the adapter is in contact with a conductive plate in the electrode channel. In response to the adapter being unplugged from the track opening, the reset springs rebound, pushing the door leaves to the positions where they shield the track opening. Therefore, in the power track, by using the door leaves to shield the track opening, the safety of the power track can be improved, such that the power track can achieve waterproofing and dustproofing, thereby prolonging the service life of the power track.

Moreover, the protective door includes the door base and the door leaves, and the materials of the door base and the door leaves are plastic. Compared with a fully metallic protective door, such a protective door allows a user to plug the adapter into the power track or unplug the adapter from the power track with less force, such that the plugging and unplugging of the adapter can be smoother, and no metallic friction noise is generated during the plugging and unplugging of the adapter, thereby improving the user experience.

Compared with a fully rubber protective door, the plastic material of this protective door is harder, less prone to deformation, less prone to aging, and less affected by oil fumes and salt stains. In this way, this protective door is stronger in durability, can further prolong the service life of the power track, and to some extent, enhances the user experience.

In addition, the housing of the power track is split-type rather than integral. Such a split-type housing can improve the assembly efficiency of the protective door. Moreover, the assembly of the protective door is also operated by a robot hand, which is conducive to automated assembly, and further improves the assembly efficiency.

For the split-type housing, in response to the structure of components inside the housing changing, in most cases, only the cover needs to be adjusted while the base plate remains in use, or only the base plate needs to be adjusted while the cover remains in use. Therefore, the housing material consumption can be reduced, thereby reducing the cost, and furthermore, the workload of adjusting the housing can be reduced. Additionally, it is conducive to large-scale production of covers or base plates.

All of the above are conducive to reducing the processing cost of the power track and improving the competitiveness of the power track in the industry.

In addition, the split-type housing may also allow the user to conveniently replace the protective door, thereby prolonging the service life of the power track.

The foregoing descriptions are merely optional embodiments of the present disclosure, and are not intended to limit the present disclosure. Within the principles of the present disclosure, any modifications, equivalent substitutions, improvements, etc., are within the protection scope of the present disclosure.

## Claims

1. A protective door (2), comprising: a door base (21), a door leaf (22), and a reset spring (23), wherein
the door base (21) has a first limiting structure (211), the door leaf (22) has a second limiting structure (221), the door leaf (22) is snap-fit on the door base (21) through engagement of the first limiting structure (211) and the second limiting structure (221), and the door leaf (22) is movable relative to the door base (21); and
the reset spring (23) is disposed between the door base (21) and the door leaf (22), and an extension and contraction direction of the reset spring (23) is parallel to a moving direction of the door leaf (22).

2. The protective door (2) according to claim 1, wherein a limiting cavity (210) is disposed on a first surface of the door base (21), and the first limiting structure (211) is disposed on a cavity wall of the limiting cavity (210);
a limiting bump (220) is disposed on a first end surface of the door leaf (22), and the second limiting structure (221) is disposed on a side wall of the limiting bump (220); and
an end portion of the limiting bump (220) extends into the limiting cavity (210), and the first limiting structure (211) is cooperated with the second limiting structure (221).

3. The protective door (2) according to claim 2, wherein a spring post (212) is disposed within the limiting cavity (210) on the first surface of the door base (21), one end of the reset spring (23) is sleeved over the spring post (212), and the other end of the reset spring (23) abuts against an end surface of the limiting bump (220).

4. The protective door (2) according to claim 2, wherein a spring groove (222) facing the door base (21) is disposed on the limiting bump (220), and an end portion of the reset spring (23) abuts against a bottom of the spring groove (222).

5. The protective door (2) according to claim 2, wherein a recess (223) facing the door base (21) is disposed on the first end surface of the door leaf (22), and the limiting bump (220) is disposed at a bottom of the recess (223).

6. The protective door (2) according to claim 2, wherein the door base (21) is elongated, a plurality of limiting cavities (210) is provided, and the plurality of limiting cavities (210) is arranged sequentially along a length direction of the door base (21); and
a plurality of door leaves (22) and a plurality of reset springs (23) are provided, an end portion of the limiting bump (220) of each of the plurality of door leaves (22) extends into one of the plurality of limiting cavities (210), and each of the plurality of reset springs (23) is disposed between the door base (21) and the door leaf (22).

7. The protective door (2) according to claim 6, wherein a plurality of partition ribs (213) are disposed on the first surface of the door base (21) along the length direction, and each of the plurality of partition ribs (213) is disposed between every two adjacent limiting cavities (210).

8. The protective door (2) according to claim 1, wherein a limiting rib (224) is disposed on a lower surface of the door leaf (22) at a position proximal to the door base (21), the lower surface of the door leaf (22) facing an electrode channel (121) of a power track on which the door leaf (22) is mounted; and
in response to the protective door (2) shielding a track opening (113) of the power track, the limiting rib (224) is in contact with or is nearly in contact with a side wall of the electrode channel (121).

9. The protective door (2) according to any one of claims 1 to 8, wherein one of the first limiting structure (211) and the second limiting structure (221) is a strip-shaped groove or a strip-shaped opening, and the other of the first limiting structure (211) and the second limiting structure (221) is a protrusion structure, wherein a strip-shaped direction of the strip-shaped groove or the strip-shaped opening is parallel to a moving direction of the door leaf (22).

10. A power track, comprising: a housing (1) and the protective door (2) as defined in any one of claims 1 to 9, wherein
the housing (1) comprises a cover (11) and a base plate (12), a track opening (113) is disposed on a panel (111) of the cover (11), the base plate (12) has an electrode channel (121), the cover (11) is detachably connected to the base plate (12) via a connecting structure, and the track opening (113) is opposite to the electrode channel (121);
the protective door (2) is sandwiched between the cover (11) and the base plate (12), and the door base (21) is assembled on the base plate (12), the door leaf (22) being movably disposed between the panel (111) and the electrode channel (121); and
in response to the door leaf (22) moving to a side of the track opening (113), the track opening (113) is communicated with the electrode channel (121), and in response to the door leaf (22) moving to shield the track opening (113), the track opening (113) is not communicated with the electrode channel (121).

11. The power track according to claim 10, wherein in response to an adapter being plugged into the power track, n door leaves (22) move to the side of the track opening (113), and in response to the adapter being unplugged from the power track, the n door leaves (22) move to shield the track opening (113) under the action of reset springs (23) connected to the door leaves (22), n being a positive integer.

12. The power track according to claim 10, wherein the connecting structure comprises a first engaging structure and a second engaging structure; and
the first engaging structure is disposed on an inner surface of the panel (111) and distributed along a length direction of the panel (111), the second engaging structure is disposed on an inner surface of the base plate (12) and distributed along a length direction of the base plate (12), and the first engaging structure is cooperated with the second engaging structure.

13. The power track according to claim 12, wherein the connecting structure further comprises a screw; and
the first engaging structure is connected to the second engaging structure via the screw.

14. The power track according to claim 12, wherein the cover (11) further comprises a side plate (112), and a wire routing channel (117) is formed between the side plate (112) and the connecting structure, wherein the side plate (112) is disposed on a side of the panel (111) along a width direction.

15. The power track according to claim 12, wherein the housing (1) further comprises a back plate (13), and the back plate (13) covers an outer surface of the base plate (12), and is snap-fit on the connecting structure.

16. The power track according to claim 12, wherein one of the first engaging structure and the second engaging structure is an engaging groove, and the other of the first engaging structure and the second engaging structure is a protruding rib; and
the first engaging structure is cooperated with the second engaging structure by the protruding rib being engaged in the engaging groove.

17. The power track according to any one of claims 10 to 16, wherein in response to the base plate (12) and the panel (111) being fixed, a top wall of the electrode channel (121) is spaced apart from the panel (111).

18. The power track according to claim 17, wherein a mounting chamber (11-12) for assembling the protective door is formed among the panel (111), the electrode channel (121), and the base plate (12).

19. The power track according to claim 18, wherein a third protruding rib (123) for fixing the protective door (2) is arranged on an inner surface of the base plate (12) and disposed within the mounting chamber (11-12); and
the third protruding rib (123) comprises a vertical portion and an inclined portion, and the inclined portion is disposed away from the inner surface of the base plate (12) and inclined towards a position of the electrode channel (121), and an obtuse angle is formed between the inclined portion and the vertical portion.

20. A track socket, comprising: an adapter, and the power track as defined in any one of claims 10 to 19, wherein the adapter is connected to the power track in a plugged and unplugged fashion.
